# EUROPEAN PATENT APPLICATION

(11) **EP 4 481 119 A1**
(43) Date of publication of application: **25.12.2024**
(21) Application number: 23306007.8
(22) Date of filing: 23.06.2023
(51) Int. Cl.: E02B 17/00, E02B 17/02, B63B 35/44

(54) **AN ASSEMBLY FOR PRODUCING OFFSHORE ELECTRICITY COMPRISING A WIND TURBINE, A MONOPILE AND A TENSIONING BUOYANT SYSTEM FREELY SURROUNDING THE MONOPILE**

(71) Applicant: TotalEnergies OneTech, 92400 Courbevoie (FR)
(72) Inventor: GENTIL, Frédéric, 92400 Courbevoie (FR); PUJOL-POCINO, Julie, 92400 Courbevoie (FR)
(74) Representative: Lavoix

(57) **Abstract**

An assembly (10) for producing offshore electricity comprising:
- a wind turbine (12),
- a monopile (14) extending along a first axis (Z), and having a lower casing containing water,
- a base (18) resting on a seabed (20), a lower end (22) of the monopile and the base forming an articulation (24) allowing the monopile to rotate around a second axis (X) and a third axis (Y) perpendicular to the first axis,
- a buoyant system (26) surrounding the monopile, and intended for floating under a surface (28) of a body of water (16), the buoyant system being vertically free with respect to the monopile,
- at least three anchoring members (30),
- at least three connecting members (32) connected to the anchoring members and tensioned by the buoyant system.

## Description

The present invention deals with an assembly for producing offshore electricity comprising a wind turbine, and a bottom-fixed supporting structure.

As of today, most of these structures comprise either a monopile or a jacket on which the tower of the turbine is fixed. To a lesser extent, there are also some examples of gravity based structures (GBS).

Jackets are made of steel tubes welded together and having a typical diameter between 0.5 and 1.5m. They are able to withstand large efforts both horizontally and vertically, and allow accessing large water depths. However, jackets have to be tailor made and are rather expensive, especially for serial fabrication and installation. Their weight is proportional to the cube of the water depth.

Monopiles are recognized by the offshore wind industry as an economical bottom-fixed concept for serial installation of wind turbines, and are therefore preferred whenever possible. Their cost per installed MW can be significantly less than that of a jacket, for which supply chain and manufacturing process are completely different.

Monopiles have however their own limitations. First, the maximum diameter that can be efficiently obtained is around 10 to 11m. As a result, due to their relative slenderness, monopiles are limited to shallow areas, and are generally not competitive with jackets above 30-40m water depths, depending on soil and local weather conditions. The largest/longest monopiles are also heavy and difficult to handle onshore and to transport to the offshore site, and finally challenging to install by either driving or drilling/grouting.

An aim of the invention is to reduce the cost of offshore electricity in some situations where jackets are generally used, because monopiles would be too large to be produced and/or too expensive, or to further reduce the electricity cost in some situation where monopiles can already be used.

To this end, the invention proposes an assembly for producing offshore electricity comprising:
- a wind turbine,
- a monopile extending along a first axis intended to be vertical, and adapted for fully supporting the wind turbine, the monopile being intended to be partly immersed in a body of water, the monopile having lower casing along the first axis defining a lower interior volume intended to contain water,
- a base intended to rest on a seabed, a lower end of the monopile and the base being adapted for forming an articulation allowing the monopile to rotate with respect to the base around a second axis and a third axis perpendicular to each other and to the first axis,
- a buoyant system surrounding the monopile around the vertical direction, the buoyant system being intended for floating under a surface of the body of water, the buoyant system being vertically free with respect to the monopile, the body of water being intended to apply an upward force on the buoyant system,
- at least three anchoring members, and
- at least three connecting members connected to the buoyant system on the one hand, and respectively to the anchoring members on the other hand, the connecting members being intended to be tensioned by the buoyant system.

In other embodiments, the assembly comprises one or several of the following features, taken in isolation or any technically feasible combination:
- the monopile has an upper casing intended to be at least partly immersed in the body of water, the upper casing and the surface of the body of water defining an upper interior volume at least partly devoid of water;
- the lower casing extends from the lower end along the first axis and has a frustoconical shape flaring upwards;
- the upper casing has a cylindrical shape, the buoyant system comprises rolls adapted for rolling on an external surface of the upper casing, and/or pads adapted for sliding on said external surface;
- the rolls comprise rubber and the pads comprise polytetrafluoroethylene or polyamide;
- each of the connecting members comprises a synthetic rope, steel cable or chain;
- each of the connecting members defines an angle with a horizontal plane, the angle being comprised between 15° and 45°;
- the connecting members are fixed to a lower part of the buoyant system;
- the assembly comprises a stopper fixed to the monopile above the buoyant system, the stopper being adapted for blocking the buoyant system along the first axis upwards in case at least one of the connecting members breaks;
- the buoyant system comprises a structure surrounding the monopile around the first axis, and at least three reservoirs fixed to the structure;
- the reservoirs comprise a gas containing at least 99 vol.% of nitrogen;
- the buoyant system is adapted for applying an upward vertical force on the connecting members considered as a whole, said vertical force being larger than twice a limit force, the limit force being such that, when a normalized maximum horizontal effort is applied to the assembly by wind, current and swell, at least one of the connecting members is not tensioned;
- the assembly comprises less than four anchoring members, and less than four connecting members; and
- the monopile has a maximum external diameter ranging from 8.0 to 12.0 meters, and a height from seabed to top that is greater than 60 meters.

The invention and its advantages will be better understood upon reading the following description, given solely by way of example and with reference to the appended drawings, in which:
- Figure 1 is a schematic perspective view of an assembly according to the invention,
- Figure 2 is a schematic side view of part of a buoyant system shown in Figure 1,
   and
- Figure 3 is a schematic side view of part of a buoyant system according to a variant of the buoyant system shown in Figures 1 and 2.

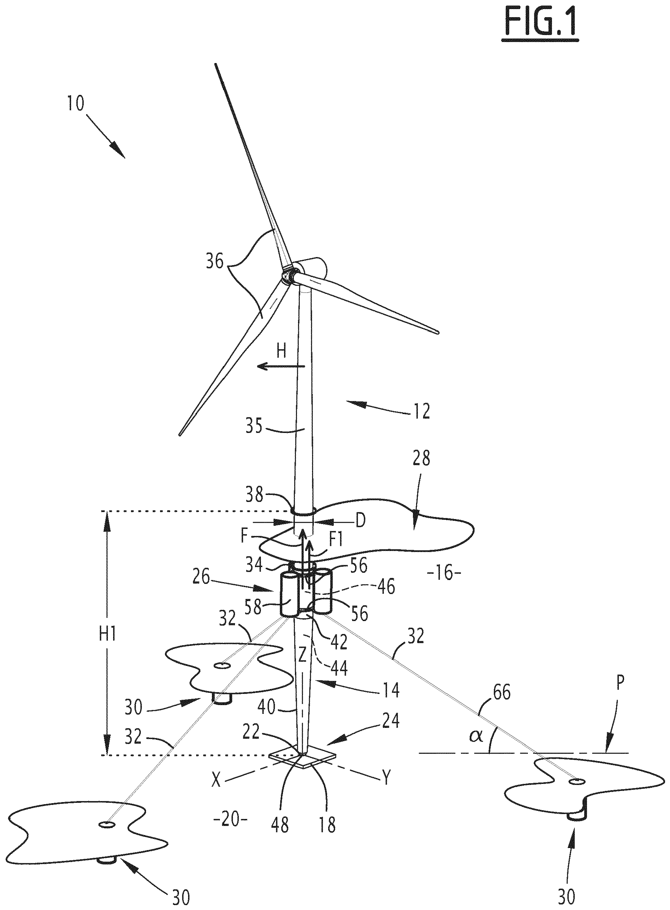

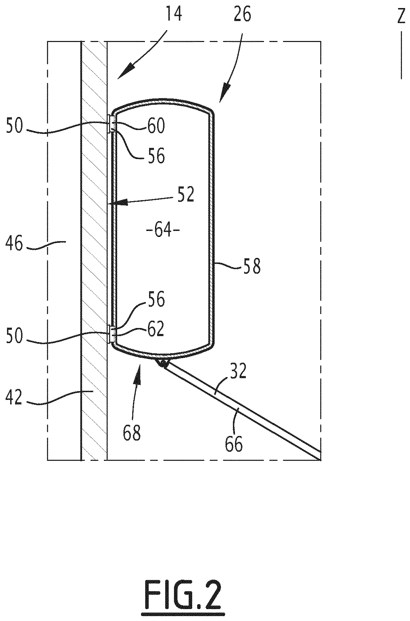

An assembly 10 according to the invention will now be described with reference to Figures 1 and 2. The assembly 10 is adapted for producing offshore electricity.

The assembly 10 comprises a wind turbine 12, and a monopile 14 extending along a first axis Z intended to be vertical, the monopile being partly immersed in a body of water and for fully supporting the wind turbine.

The assembly 10 comprises a base 18 resting on a seabed 20, a lower end 22 of the monopile 14 and the base being adapted for forming an articulation 24 allowing the monopile to rotate with respect to the base around a second axis X and a third axis Y perpendicular to each other and to the first axis Z.

The assembly 10 comprises a buoyant system 26 surrounding the monopile 14 around the vertical direction Z, the buoyant system being intended for floating under a surface 28 of the body of water 16, the buoyant system being vertically free with respect to the monopile.

The assembly 10 for example comprises three anchoring members 30, and three connecting members 32 connected to the buoyant system 26 on the one hand, and respectively to the anchoring members 30 on the other hand, the connecting members being intended to be tensioned by the buoyant system.

As a variant (not shown), the assembly 10 comprises four or more anchoring members 30, and four or more connecting members 32.

The assembly 10 for example comprises a stopper 34 fixed to the monopile 14 above the buoyant system 26, the stopper being adapted for blocking the buoyant system along the first axis Z upwards in case at least one of the connecting members 32 breaks.

The body of water 16 is for example a sea or a lake. The body of water 16 is intended to apply an upward force F on the buoyant system 26.

The wind turbine 12 comprises a tower 34 for example fixed to the top of the monopile 14, and blades 36 rotatably mounted on the tower.

Advantageously, the tower 34 has a bolted flange 38 which mechanically connects the wind turbine 12 to the monopile 14.

For example, the monopile 14 has a maximum external diameter D ranging from 8.0 to 12.0 meters, and a height H1 from seabed to top that is greater than 60 meters.

The monopile 14 advantageously comprises at least 90wt.% of steel or concrete.

The monopile 14 has a lower casing 40 and an upper casing 42 along the first axis Z.

The lower casing 40 defines a lower interior volume 44 containing water. The lower casing 40 for example extends from the lower end 22 along the first axis Z and advantageously has a frustoconical shape flaring upwards. Alternatively, the lower casing 40 may be done with a trussed beam, with a rectangular or triangular section.

The upper casing 42 is at least partly immersed in the body of water 16. The surface 28 of the body of water and the upper casing 42 define an upper interior volume 46 that is advantageously at least partly devoid of water. The upper casing 42 advantageously has a cylindrical shape.

The depth of the bottom part of the buoyant part is limited (typically around 50 m for a water depth of 150m) in order to limit the external hydrostatic design pressure.

The lower end 22 of the monopile 14 advantageously convex, for example spherical, and is adapted for resting in a housing 48 defined by the base. This prevents the lower end 22 from shifting along the second axis X and the third axis Y. A pseudo ball joint made with elastomeric pads may also be considered in case frictions between two surfaces in contact was to be avoided.

In the example, the buoyant system 26 comprises pads 50 adapted for sliding on an external surface 52 of the upper casing 42.

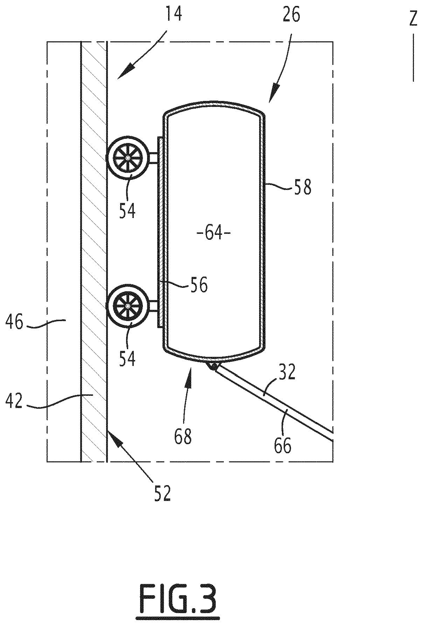

As a variant or a complement, the buoyant system 26 comprises rolls 54 (Figure 3) adapted for rolling on the external surface 52.

The buoyant system 26 for example comprises a structure 56 surrounding the monopile 14 around the first axis Z, and three reservoirs 58 fixed to the structure.

As variants (not shown), the buoyant system 26 comprises only one reservoir advantageously surrounding the monopile 14, or two reservoirs, or more than three reservoirs. Said one reservoir may be cylindrical.

The buoyant system 26 is for example adapted for applying an upward vertical force F1 on the connecting members 32 considered as a whole, said vertical force being larger than x time a limit force (x value being typically in a range from 1.25 to 1.75) , the limit force being such that, when a normalized maximum horizontal effort H is applied to the assembly 10 by wind, current and swell, at least one of the connecting members 32 is not tensioned. This advantagesouly provides enough tension in the connecting members 32 to give a sufficient safety factor against detensionning.

The structure 56 for example comprises two circular stiffened members 60, 62 mechanically connected to the reservoirs 58.

For example, the rolls 54 comprise rubber and the pads 50 comprise polytetrafluoroethylene or polyamide. The rolls 54 and/or pads 50 are for example fixed to the structure 56.

The reservoirs 58 are for example cylindrical around a vertical axis. The reservoirs 58 advantageously comprise a gas 64, for example containing at least 99 vol.% of nitrogen.

Each of the connecting members 32 advantageously comprises a synthetic rope 66. Steel cables or chains completed by additional buoys to reduce submerged weight may also be considered in the connecting members 32.

For example, each of the connecting members 32 defines an angle α with a horizontal plane P, the angle α being comprised between 15° and 45°.

The connecting members 32 are advantageously fixed to a lower part 68 of the buoyant system 26, for example to a bottom of each of the reservoirs 58.

Thanks to the above features, the monopile 14 is guided by the buoyant system 26, which allows the monopile 14 to simply rest on the base 18 and limits the required diameter D for the monopile 14.

As a result, the cost of producing and installing the assembly 10 is reduced, which reduces the offshore electricity cost in some situations where jackets are generally used, because monopiles would be too large to be produced and/or too expensive, or to further reduce the electricity cost in some situation where monopiles can be used.

By keeping the monopile 14 diameter D within reasonable figures, the assembly 10 also favours a bolted flange 38 between the wind turbine 12 and the monopile 14.

The conical shape of the lower casing 40 minimizes the amount of material needed to take up a decreasing bending moment.

Thanks to the articulation 24, and a number of connecting members 32 equal to three, the assembly 10 is advantageously isostatic.

The invention also provides design and installation flexibility against water depth and soil conditions variations over large windfarms sites, thus improving serial fabrication and reducing installation costs. The invention allows monopiles to access to larger water depths despite their slenderness. The invention may also improve the design, procurement and installation schedule.

In general, the invention is adapted to the serial fabrication and installation in windfarm development projects. The invention is also compatible with modern installation vessels, such as Huisman's Windfarms Installation Vessel designed for serial installation of monopiles and wind turbines, reducing logistics and marshalling costs.

Compared with a pure floating solution, the invention provides lower motions of the support (in a same range to those of a monopile installed in 50m water depth) which facilitate the integration of the turbine with a floating vessel or the future jack-ups operating in large water depth.

## Claims

1. An assembly (10) for producing offshore electricity comprising:
- a wind turbine (12),
- a monopile (14) extending along a first axis (Z) intended to be vertical, and adapted for fully supporting the wind turbine (12), the monopile (14) being intended to be partly immersed in a body of water (16), the monopile (14) having lower casing (40) along the first axis (Z) defining a lower interior volume (44) intended to contain water,
- a base (18) intended to rest on a seabed (20), a lower end (22) of the monopile (14) and the base (18) being adapted for forming an articulation (24) allowing the monopile (14) to rotate with respect to the base (18) around a second axis (X) and a third axis (Y) perpendicular to each other and to the first axis (Z),
- a buoyant system (26) surrounding the monopile (14) around the vertical direction (Z), the buoyant system (26) being intended for floating under a surface (28) of the body of water (16), the buoyant system (26) being vertically free with respect to the monopile (14), the body of water (16) being intended to apply an upward force (F) on the buoyant system (26),
- at least three anchoring members (30), and
- at least three connecting members (32) connected to the buoyant system (26) on the one hand, and respectively to the anchoring members (30) on the other hand, the connecting members (32) being intended to be tensioned by the buoyant system (26).

2. The assembly (10) according to claim 1, wherein the monopile (14) has an upper casing (42) intended to be at least partly immersed in the body of water (16), the upper casing (42) and the surface (28) of the body of water (16) defining an upper interior volume (46) at least partly devoid of water.

3. The assembly (10) according to claim 2, wherein the lower casing (40) extends from the lower end (22) along the first axis (Z) and has a frustoconical shape flaring upwards.

4. The assembly (10) according to claim 2 or 3, wherein the upper casing (42) has a cylindrical shape, the buoyant system (26) comprises rolls (54) adapted for rolling on an external surface (52) of the upper casing (42), and/or pads (50) adapted for sliding on said external surface (52).

5. The assembly (10) according to claim 5, wherein the rolls (54) comprise rubber and the pads (50) comprise polytetrafluoroethylene or polyamide.

6. The assembly (10) according to any one of claims 1 to 5, wherein each of the connecting members (32) comprises a synthetic rope (66), steel cable or chain.

7. The assembly (10) according to any one of claims 1 to 6, wherein each of the connecting members (32) defines an angle (α) with a horizontal plane (P), the angle (α) being comprised between 15° and 45°.

8. The assembly (10) according to any one of claims 1 to 7, wherein the connecting members (32) are fixed to a lower part (68) of the buoyant system (26).

9. The assembly (10) according to any one of claims 1 to 8, comprising a stopper (34) fixed to the monopile (14) above the buoyant system (26), the stopper (34) being adapted for blocking the buoyant system (26) along the first axis (Z) upwards in case at least one of the connecting members (32) breaks.

10. The assembly (10) according to any one of claims 1 to 9, wherein the buoyant system (26) comprises a structure (56) surrounding the monopile (14) around the first axis (Z), and at least three reservoirs (58) fixed to the structure (56).

11. The assembly (10) according to claim 10, wherein the reservoirs (58) comprise a gas (64) containing at least 99 vol.% of nitrogen.

12. The assembly (10) according to any one of claims 1 to 11, wherein the buoyant system (26) is adapted for applying an upward vertical force (F1) on the connecting members (32) considered as a whole, said vertical force (F1) being larger than twice a limit force, the limit force being such that, when a normalized maximum horizontal effort (H) is applied to the assembly (10) by wind, current and swell, at least one of the connecting members (32) is not tensioned.

13. The assembly (10) according to any one of claims 1 to 12, comprising less than four anchoring members (30), and less than four connecting members (32).

14. The assembly (10) according to any one of claims 1 to 13, wherein the monopile (14) has a maximum external diameter (D) ranging from 8.0 to 12.0 meters, and a height (H1) from seabed to top that is greater than 60 meters.
